(19) Europäisches Patentamt / European Patent Office / Office européen des brevets

(11) **EP 2 486 509 B1**

(12) **EUROPEAN PATENT SPECIFICATION**

(45) Date of publication and mention of the grant of the patent:
**02.11.2022 Bulletin 2022/44**

(21) Application number: **10821668.0**

(22) Date of filing: **09.10.2010**

(51) International Patent Classification (IPC):
**G06F 21/57** *(2013.01)*    **G06F 9/46** *(2006.01)*
**G06F 9/445** *(2018.01)*    **G06F 21/62** *(2013.01)*
**G06F 8/61** *(2018.01)*    **H04L 9/40** *(2022.01)*

(52) Cooperative Patent Classification (CPC):
**H04L 63/123; G06F 8/61; G06F 9/468;**
**G06F 21/575; G06F 21/6218; H04L 63/102;**
G06F 2221/2149

(86) International application number:
**PCT/IB2010/054572**

(87) International publication number:
**WO 2011/042892 (14.04.2011 Gazette 2011/15)**

(54) **PLATFORM SECURITY**

PLATTFORMSICHERHEIT

SÉCURITÉ DE PLATEFORME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2009 US 250126 P**

(43) Date of publication of application:
**15.08.2012 Bulletin 2012/33**

(73) Proprietor: **Nokia Technologies Oy**
**02610 Espoo (FI)**

(72) Inventors:
- **MANTYLA, Janne, Sakari**
  **FI-02180 Espoo (FI)**
- **BUCHHOLTZ, Mikael**
  **Kobenhavn V 1661 (DK)**
- **KYLANPAA, Markku**
  **FI-00950 Helsinki (FI)**
- **SAVELA, Markku**
  **Espoo**
  **02110 (FI)**

(74) Representative: **Espatent Oy**
**Kaivokatu 10 D**
**00100 Helsinki (FI)**

(56) References cited:
**EP-A2- 1 806 656**    **US-A- 5 940 513**
**US-A1- 2003 037 327**    **US-A1- 2003 051 169**
**US-A1- 2005 108 181**    **US-A1- 2006 150 256**
**US-A1- 2006 236 122**    **US-A1- 2007 157 310**
**US-A1- 2008 165 952**    **US-A1- 2008 189 793**
**US-B1- 6 567 917**

- **Anonymous: "ClickOnce - Wikipedia", , 5 September 2009 (2009-09-05), XP055311767, Retrieved from the Internet: URL:https://en.wikipedia.org/w/index.php?title=ClickOnce&oldid=312010736 [retrieved on 2016-10-18]**

**Description**

TECHNICAL FIELD:

The exemplary and non-limiting embodiments of this invention relate generally to techniques in software development and execution systems, methods, devices and computer programs and, more specifically, relate to providing techniques of resource access control to a software application, such as a software application intended to execute in a device having e.g., wireless communication capabilities.

BACKGROUND:

Various abbreviations that appear in the specification and/or in the drawing figures are defined as follows:

| | |
|---|---|
| AC | access control |
| ACL | access control list |
| API | application programming interface |
| D-Bus | An IPC and RPC mechanism originally developed for Linux to replace existing and competing IPC solutions with one unified protocol. |
| DRM | digital rights management HMACkeyed-hash message authentication code |
| IPC | inter-process communication |
| Linux | an open source UNIX-like operating system based on the Linux kernel. |
| POSIX | portable operating system interface for UNIX |
| QA | quality assurance |
| RPC | remote procedure calling |
| RSA | Rivest, Shamir, Adleman asymmetric crypto algorithm |
| SHA | secure hash algorithm |
| SIM | subscriber identity module |
| SSRRU | software sources ranking and resources usage |
| SW | software |
| TrEE | trusted execution environment |

D-Bus was designed to allow communication between system-level processes (such as printer and hardware driver services) and normal user processes. D-bus uses a fast, binary message-passing protocol, which is suitable for same-machine communication due to its low latency and low overhead.

Its specification is currently defined by the freedesktop.org project, and is available to all parties. Communication in general happens through a central server application, called the "bus" (hence the name), but direct application-to-application communication is also possible. When communicating on a bus, applications can query which other applications and services are available, as well as activate one on demand. D-Bus buses are used when many-to-many communication is desired. In order to achieve that, a central server is launched before any applications can connect to the bus: this server is responsible for keeping track of the applications that are connected and for properly routing messages from their source to their destination. In addition, D-Bus defines two well-known buses, called the system bus and the session bus. These buses are special in the sense that they have well-defined semantics: some services are defined to be found in one or both of these buses. For example, an application wishing to query the list of hardware devices attached to a computer will likely communicate to a service available on the system bus, while a service providing for the opening of a web browser will likely be found. On the system bus, one can also expect to find restrictions on what services each application is allowed to offer.

Document (US2008/189793 A1) describes methods for setting up a new software application on a mobile device and setting the application permissions. This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

SUMMARY:

The present invention is defined by the appended independent claims. Preferred embodiments are defined in the dependent claims. In an exemplary aspect of the invention, there is a method, comprising receiving, at a device, from a source a package comprising a binary file representing an application software and an associated resource declaration indicating resources required by the application software, extracting the resource declaration from the package, forming an intersection of the extracted resource declaration and a set of allowable resources, for the source of the package, obtained from a software sources ranking and resources usage policy, granting the application software resources based on the result of the formed intersection, installing the application software, and storing an indication of the granted resources in a resource possession list.

In an exemplary aspect of the invention, there is an apparatus comprising means for receiving from a source a package comprising a binary file representing an application software and an associated resource declaration indicating resources required by the application software, means for extracting the resource declaration from the package, and means for forming an intersection of the extracted resource declaration and a set of allowable resources, for the source of the package, obtained from a software sources ranking and resources usage policy, means for installing the application software, and means for storing an indication of the granted resources in a resource possession list.

BRIEF DESCRIPTION OF THE DRAWINGS:

The foregoing and other aspects of embodiments of this invention are made more evident in the following Detailed Description, when read in conjunction with the attached Drawing Figures, wherein:

Figure 1 is a simplified block diagram of a device and shows process flow during a SW installation, according to one embodiment.

Figure 2 shows the device of Figure 1 in greater detail, and is useful in explaining the concept of a "principle of least privileges", according to one embodiment.

Figure 3 shows a message sequence chart (MSC) for an installation process in accordance with the exemplary embodiments of this invention.

Figure 4 illustrates a procedure of obtaining a result set of resources for an application, according to one embodiment.

Figures 5, 6, 7 and 8 each show the interaction of the components shown in Figure 1 at application run time for various use cases of interest, according to one embodiment.

Figure 9 is a logic flow diagram that illustrates various hardware enables and a boot process (operation of a boot loader), according to one embodiment.

Figures 10A and 10B, collectively referred to as Figure 10, show the operation of integrity protection using a validator module or function, and a conceptual model of the validation process, respectively, according to one embodiment.

Figure 11 shows the operation of privacy protection using protected storage, according to one embodiment.

Figure 12 presents a non-limiting example of a security policy file, according to one embodiment.

Figure 13 shows a non-limiting AC control example having a manifest file for a server and for a client, according to one embodiment.

Figures 14A, 14B and 14C, collectively referred to as Figure 14, provide a non-limiting example of a manifest file for the D-Bus server 20B, a manifest file for the D-Bus client 20A, and a D-Bus configuration file, respectively, according to embodiments of the invention.

Figure 15 shows, according to one embodiment, one example of a device that is suitable for use in realizing the exemplary embodiments of this invention depicted in Figures 1-14 and 16-18.

Figures 16, 17 and 18 are each a logic flow diagram that illustrate the operation of a method, and results of execution of computer program instructions, in accordance with the exemplary embodiments of this invention.

DETAILED DESCRIPTION:

Examples of a method, apparatus, and computer program for providing techniques of resource access control to a software application are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Access control in Linux is based on a multi-user model. POSIX capabilities are not fully exploited.

A need exists for process level access control, especially one that would require minimal changes to the current model while providing flexibility and granularity. There are some existing and currently available security extensions, but for various reasons they do not fulfill the foregoing criteria.

The exemplary embodiments of this invention apply and extend aspects of UNIX AC to fulfill the foregoing criteria, and employ a multi-user model to provide application level AC.

The exemplary embodiments of this invention adhere to a "principle of least privileges" of access control, where an application should be able to access only a limited set of resources actually needed by that application. Certain resources may be considered to be protected resources such as, but not limited to, cellular communication functionality and location/mapping functionality. An application must declare those resources that it needs. The declaration of needed resources may be in the form of a manifest file.

It is noted that in the preferred embodiments there are no security APIs by default.

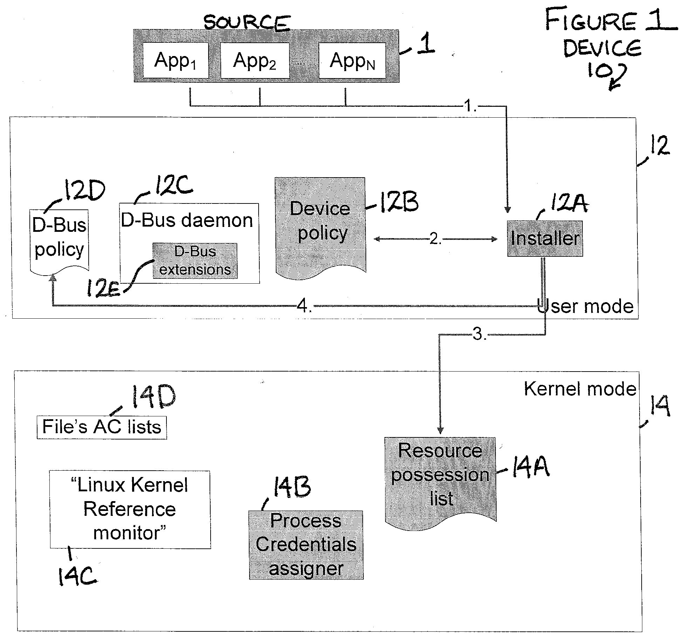

Figure 1 shows a device 10 that uses Linux and that conceptually contains a user mode 12 and a kernel mode 14 according to one embodiment. One or more applications are loaded from a (trusted) source 1.

A given SW (e.g., a user application) obtains its rights based on its source code and the manifest file. This entails creation, during the software development phase, of the manifest file to specify the resources needed by the SW, and placing the SW and associated manifest file into a suitable repository or source. Figure 1 shows the (trusted) source 1 containing one or more applications (App$_1$, App$_2$ ... App$_N$) according to one embodiment. It can be assumed that there are quality assurance checks associated with the source 1. A security policy file is accessible in one embodiment only for an installer 12A that forms a part of the user mode 12, and in another embodiment the security policy file itself is readable by installers not yet in the user mode. Also included is a device policy 12B, which would be used to identify and verify trusted source(s) 1, a D-Bus daemon 12C and a D-Bus policy 12D. In accordance with an aspect of the exemplary embodiments of this invention the D-Bus daemon includes D-Bus extensions 12E. The kernel mode 14 includes, further in accordance with an aspect of the exemplary embodiments of this invention, a resource possession list 14A and a process credentials assigner 14B. Also included are a Linux kernel reference monitor 14C and a file's AC lists 14D.

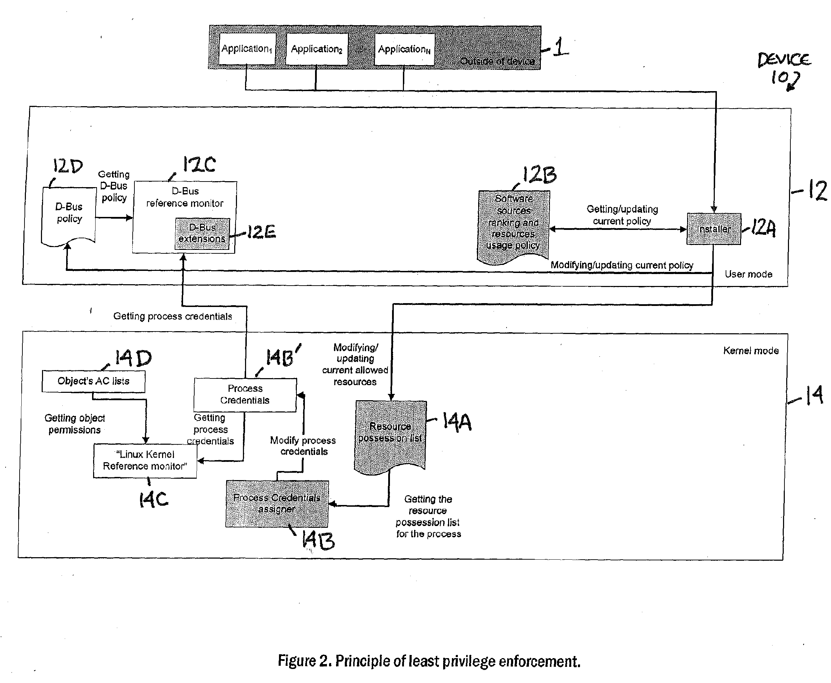

Figure 2 shows the foregoing components in somewhat greater detail, and provides an overview of the principle of least privileges enforcement according to one embodiment.

As was mentioned above, an important goal of the security architecture is an enforcement of the "principle of least privilege". As an aid to explanation, a most common abstraction for representing a computer system is dividing it into objects and subjects. *Subject* is an active entity, which represents a system's user or system process in the computer system. By a subject, one may denote a process in the system, meaning that the access control is process-based. *Object* is a passive entity, which represents a file, a system resource or even a subject. The latter means that, for example, an executable file is an object of a computer system, but when it starts to execute it becomes a subject of this system. The term *resource* is used to denote objects in the system.

The third commonly used abstraction is an *access type:* an operation that a subject can perform on an object. The concrete meaning of access type depends on the computer system. For the file server it can be an ability to read an object (file), to write it, to execute and so forth. For database systems access type can be an ability to insert a new record into a table, to search for data in the database and so forth.

The principle of least privilege may thus be defined as *"every subject must be able to access only such objects that are necessary to its legitimate purpose"*.

Turning now to Figure 2, the installer 12A may be considered as the "entrance door" for new applications, application updates, device policy updates and key updates.

The software sources ranking and resources usage policy (SSRRU policy) is embodied in the device policy block 12B of Figure 1. The SSRRU policy defines the possible known sources of SW for the device 10, their hierarchy, and allowed resources for each of them. For example, the SSRRU policy may specify that there are two known sources: Source1 and Source2, where Source1 is considered to be more trusted than Source2; and SW from Source1 is allowed to use any possible resources, while SW from Source2 may only use Resource1 and Resource2. Initially, the SSRRU policy may be defined by a manufacturer of the device or an operator, if, for example, a device is intended to be distributed via special promotions. For example, an operator may sell a device to an end-user for a small price, but in one embodiment the user is expected to use only a set of SW sources defined by the manufacturer/operator while in another embodiment the user is allowed to use only the manufacturer's/operator's set of SW sources which may be e.g., a SW repository. This policy can be later changed by an authorized policy update. If there are no restrictions enabled on the device, a user can add new sources of SW and assign a list of allowed resources to them. However, the user cannot change the hierarchy of device predefined sources; and cannot grant some sensitive resource(s) to new sources of SW.

The D-Bus is an inter-processor communication (IPC) system for software applications to communicate with each other. D-Bus allows programs to register and offer services to others, and it also allows access control rights to be defined for these services. Access control rights for each D-Bus service can be declared in the D-Bus policy file 12D. Thus, it is possible to define which subject (process) is allowed to access a particular D-Bus service.

The D-Bus reference monitor is a part of the D-Bus daemon 12C, and makes access control decisions based on D-Bus policy, process credentials and the service requested. For example, Process 1 wants to send a message to a Service1. The D-Bus reference monitor will check in the D-Bus policy 12D if Process1 is allowed to send a message to Service1. Depending on the policy in place the message will be sent or declined. The D-Bus reference monitor is extended, in accordance with an aspect of this invention, to include the extensions 12E.

The kernel mode 14 components include object's access control list 14D. The access control list (ACL) associates with each object in a computer system a list of the system's subjects (which have at least one access right to the object in question). The ACL is typically stored with the object. For the file system AC it may be preferred to use an existing Unix ACL, which can specify access types for owner, owner's group and others. The access types are "read", "write" and "execute".

The kernel mode 14 also includes the process credentials assigner 14B which, in accordance with an aspect of this invention, is enabled to modify process credentials at the moment when a process starts to execute.

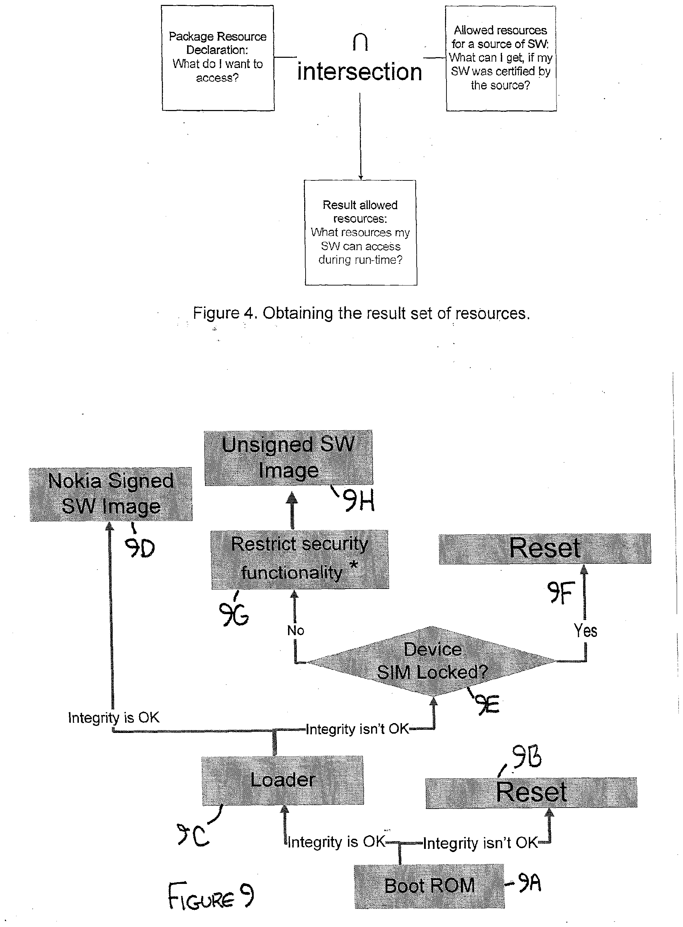

The Linux kernel reference monitor 14C is a distributed entity which makes an AC decision based on process credentials and an object's ACLs. Figure 4, described below, provide additional details concerning the Linux kernel reference monitor functionality, according to one embodiment.

The resource possession list 14A defines which resources are allowed to be accessed by a process in the system. The list contains a mapping between *application identifiers* and allowed resources for each such application.

An *application identifier* fulfills the following requirements: it should be impossible to forge; it should be unique (identify an application uniquely); and it should remain the same for application updates, between boot-ups, for different instances of the same application, and after application restart. The *application identifier* may be represented by a triplet:

$$AppID = \{SourceID,\ PackageName,\ AppName\},$$

where *SourceID* is a unique identifier of an application source. While it should be tight with a key, which is used by this source, it shouldn't directly depend on the key (as the key may be changed due to key compromising). The example may be a current domain name of a repository (for example: Nokia, Maemo), or a unique identifier derived from a key certificate. *PackageName* is a package name without a version number. *AppName* is defined by a developer, in case there are a number of applications within the same binary package, and these applications need different access rights. The*AppName* is defined within the Aegis manifest file. In case there is no such definition, all applications within the same package get the same application identity of a form: AppID = {SourceID, PackageName, none}.

In the currently considered architecture a *resource* is a virtual object which represents some functionality. It can be a file on the filesystem, a D-Bus service and so on. Resources are described using *resource token* strings. For example: "Location", "Network-Costly", etc. There is a special service in the system which defines for each sensitive system resource a resource token which should protect this resource. For example, consider a "Network-Costly" resource token. It represents access to all communication channels which may incur costs to a user. The real system objects that are protected by this resource are filesystem objects (such as network configuration files), the possibility to execute "Connect" and "Bind" commands.

An initial set of protected resources may include a small set of predefined resources (such as access to user's data, location information, network services and so forth). Moreover, each application has a possibility to define a new resource which the application itself provides. In this case it is important to ensure that there are no conflicts in the resource's namespace which may be done, for example, by an authority that certifies SW.

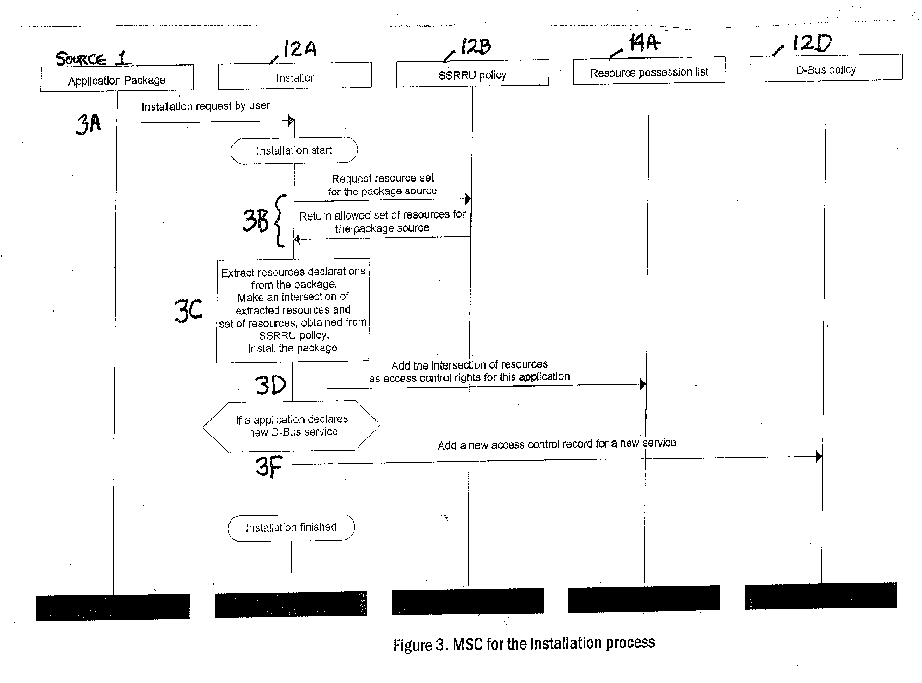

Figures 1 and 3 show an exemplary interaction between these various components for the case of a new application installation.

In Figure 1, an application arrives at the installer 12A (the arrow labeled 1). The installer 12A checks the device policy 12B for information concerning the source 1 from which the application arrived (the arrow labeled 2). The installer 12A modifies the resource possession list 14A accordingly for the application (the arrow labeled 3). The installer 12A also accordingly modifies the D-Bus policy 12D.

Describing the installation process now in further detail in Figure 3, upon a new application installation (e.g., request by a user in 3A) the installer 14A at 3B checks the software sources ranking and resources usage policy in the SSRRU policy 12B to determine if the source 1 is known, and what kind of resources are allowed for SW from this source. At 3C the installer 12A extracts the resource declarations from the package, and makes an intersection of the extracted resource declarations and the set of resources obtained from the SSRRU policy 12B. The package is then installed. Some user-related resources, such as an ability to read user data, network communication and so forth may also be granted by a user. After successful installation, at 3D the installer 12A modifies the resource possession list 14A by adding a new rule for the new package, where the set of allowed resources is an intersection of package-requested resources and the set of resources defined by the SSRRU 12B for the source 1 of the SW. The process of forming a result set of allowed resources is depicted in Figure 4. At 3F the installer 12A also modifies the D-Bus policy 12D if the new application defines a new D-Bus service.

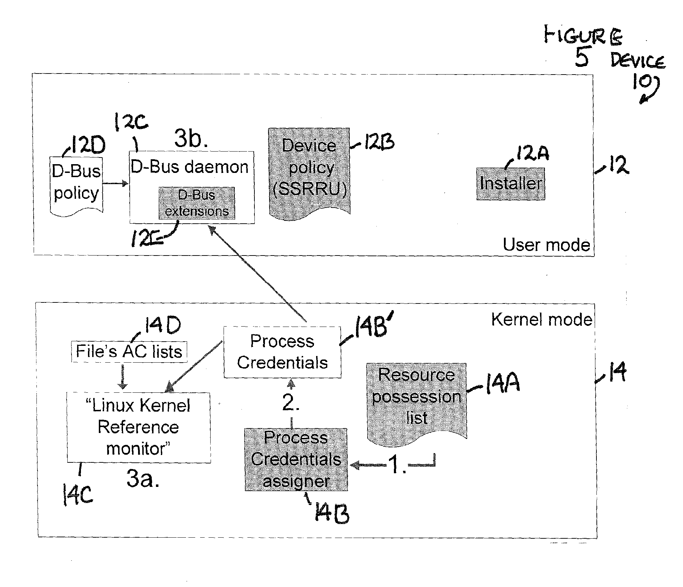

Figures 5, 6, 7 and 8 show the interaction of the components at application run time according to one embodiment of the invention. Considering Figure 5 first, the process credentials assigner 14B obtains the allowed set of resources from the resource possession list 14A (arrow labeled 1), and (arrow labeled 2) the process credentials assigner 14B modifies the process' credentials 14B' (process task structure). At 3a the Linux reference monitor 14C makes an AC decision based on the process's credentials 14B' and the file system AC lists 14D. At 3b the D-Bus daemon 12C makes an AC decision based on the process credentials 14B' and D-Bus policy 12D. The application calls the library to obtain process credentials, and makes a decision based on the process credentials 14B' and its own policy.

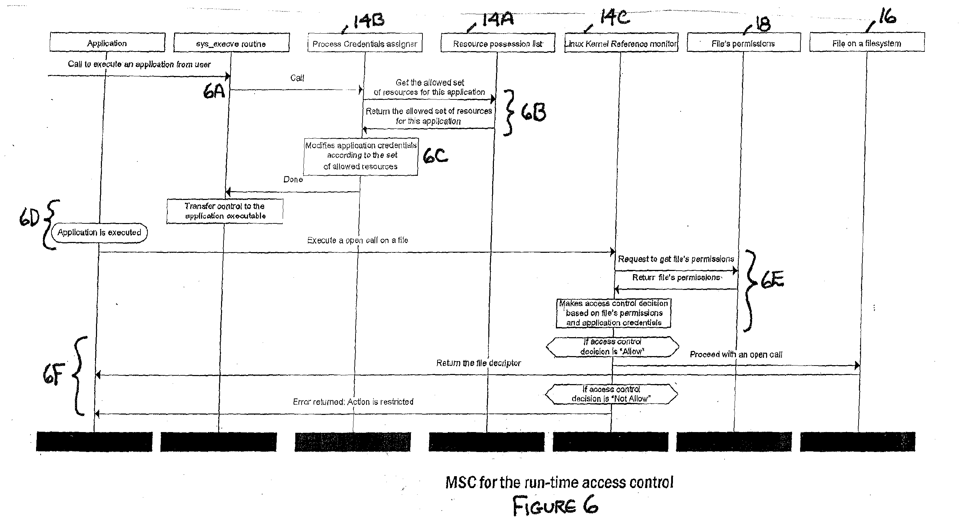

Reference is now made to Figure 6 for a more detailed description of the operations performed when the application starts to execute, according to one embodiment. The run-time access control can be done at different levels, depending on the action that application attempts to perform (for example, file access or sending a D-Bus message), and the actual level of delegation of the AC decision. The latter means that the application can rely on the operating system or the D-Bus to protect the resource it provides, or may provide its own protection.

Figure 6 shows a MSC for the non-limiting case of filesystem access, when the access to a file is constrained by its file permissions. In this example the access rights check is delegated to the Linux kernel reference monitor 14C. When a process starts to execute a sys_execve kernel function is called. This function is enhanced so that it calls (at 6A) the process credentials assigner 14B, which makes a look-up in the resource possession list 14A and assigns corresponding process credentials to the process (6B). This is done by modifying the task kernel structure (at 6C the process credentials assigner 14B modifies the application's credentials according to the set of allowed resources). Control is then transferred to the application and the application executes at 6D. When a process wants to access a system object (in Figure 6 it is a file on a filesystem 16), the Linux kernel reference monitor 14C obtains its credentials, ACLs of an object (for the filesystem object, in this case the file's permissions 18) and, based on this information, makes an access control decision (6E). In Linux this is done inside system calls, for example inside a sysopen call for the case shown in the Figure 6. The interactions labeled 6F generally show the operation for the case where the access control is allowed or denied.

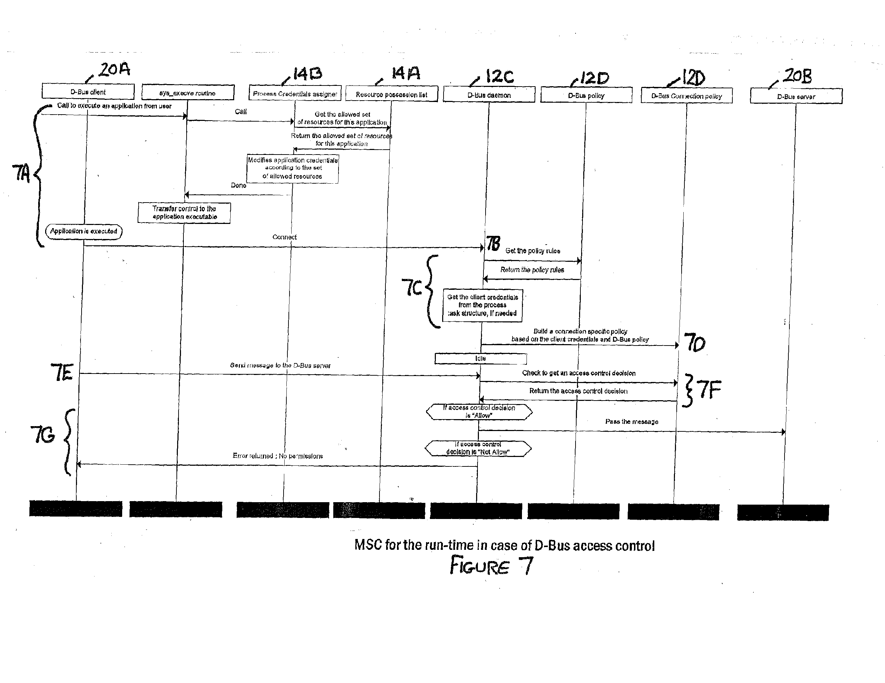

Reference is now made to Figure 7, which is the MSC run-time in a case of D-Bus access control. For the case of IPC, which is done over the D-Bus, the access control decision is made by theD-Bus reference monitor (D-Bus daemon 12C), which takes into account process credentials, the service that the process wants to access and the D-Bus policy. There are two applications in Figure 7, according to one embodiment: a D-Bus client 20A and a D-Bus server 20B. The D-Bus client 20A is started in the same manner as the application described in Figure 6 (generally shown as 7A). The D-Bus server is assumed to be started in the same way as well (and this is omitted from Figure 7). After a successful start the D-Bus client 20A attempts to connect to the D-Bus via the D-Bus daemon 12C (7B). At 7Cthe D-Bus daemon 12C obtains the D-Bus client credentials (either from its process task structure or in a simple case, it uses a static mapping from the system configuration file) and the D-Bus policy rules from D-Bus policy file 12D. Based on the obtained information the D-Bus daemon 12C creates a memory representation of the policy for the client 20A (D-Bus connection policy 12D shown at 7D). When the D-Bus client 20A sends a message to the D-Bus server 20B (7E), it first sends it to the D-Bus daemon 12C. The D-Bus daemon 12C checks the connection policy 12D and makes an access control decision based on it (7F). As a result, the message is ether passed to its intended receiver (to the D-Bus server 20B in this case) or the D-Bus client 20A receives an error message (7F).

Whereas Figure 7 shows the policy 12D as separate from the daemon 12C, in an embodiment the policy is not a physically separate component but is a part of the running D-Bus daemon hosting the ruleset that is allowed. So for example a client wanting to connect to the server using the D-Bus means that the client makes a socket connection to the D-Bus daemon, which makes the access control decision based on the 1) credentials assigned to the client, 2) D-Bus policy, and if the access is approved, theD-Bus daemon makes a socket connection to the server.

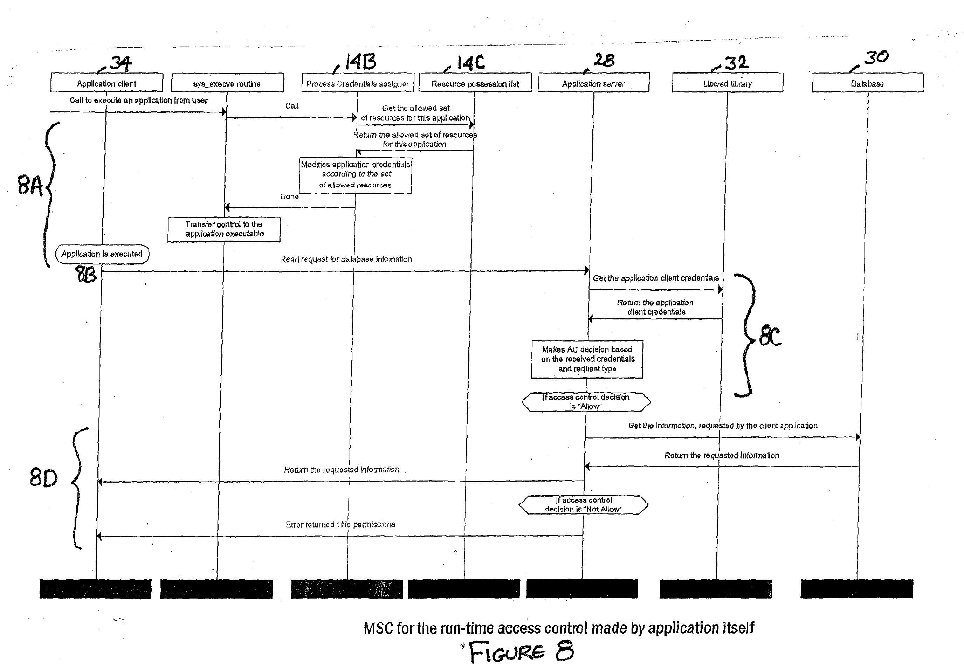

For completeness, Figure 8 shows a case where an application makes access control decision by itself. For example, assume that a certain application (application server 28) provides a database 30 for other applications. The database 30 is stored in a file system, and only the application server 28 can access this file. This can be done, for example, by specifying the permissions of the file in a conventional UNIX way (for example, by setting the file to be readable and writable only by the owner). In order to make an access control decision, the application server 28 needs to have a reliable way of obtaining the credentials of another application (application client 34) that wants to access the database 30. This is accommodated by providing a credentials library (libcred) 32, which provides the ability for the application client 34 to obtain the needed information from the application server 28. In Figure 8 it is assumed that the application client is launched as described previously (shown at 8A). At 8B the application client 34 makes a read request for database information from the application server 28. At 8C the application server 28 accesses the library 32 to obtain the credentials of the application client 34, and makes a decision of whether to grant access to the database 30. *D indicates the actions for the case where access is granted or access is denied.

Figure 9 is a logic flow diagram that illustrates various hardware enables and a boot process (operation of a boot loaded), according to one embodiment of the invention. Figure 9 assumes a presence of a TrEE (for example the presence of an ARM® Trust Zone) with two main keys: a root public key, and a root device specific key. In 9A the boot ROM integrity is checked. If the integrity is not verified a reset operation occurs (9B) and processing is halted. If the boot ROM integrity is verified the loader integrity is checked (9C). If the integrity is verified a signed SW image is assumed to be present (9D) and can be executed. If the integrity is not verified a check is made at 9E to determine if the device 10 is SIM locked (or, more descriptively, to determine if there is a policy in place to prevent access to certain non-approved applications). If this is the case the reset branch is taken (9F), and a requested application is not loaded/executed. If the device 10 is not SIM locked, then in accordance with the exemplary embodiments of this invention certain security functionality is restricted (9G). The restriction of the security functionality is implemented by the TrEE and can include disabling certain DRM keys, and preventing content from a previous mode from being decrypted. The unsigned SW image is then loaded and executed (9H) without any restriction on what the SW image can do once it is executed. The only restrictions on the device are those posed by the restricted security functionality provided by the TrEE.

One technical effect of this boot process is to control what gets booted and how, and allowing the bootup of the application's own kernels in a normally closed platform by removing threats that in the past have made it insecure to use applications having their own kernels. This is enabled in an embodiment by making the decision to boot an unknown kernel conditional on the policy and status information, which in the example embodiment the status information is the SIM-lock information. This conditional boot can be overridden by using an operator unlock code, which in an embodiment may be automatically overridden after passage of a preset period of time (e.g., 2 years). Note that disabling certain functionality while booting is not the same as 'secure booting' in which there is no boot whatsoever if the signature fails. It is a 'trusted boot' in which the boot does take place, though restricted because of the information e.g., the TrEE which in e.g., a remote attestation case leads to blocking (such as for example blocking network access to a VPN framework).

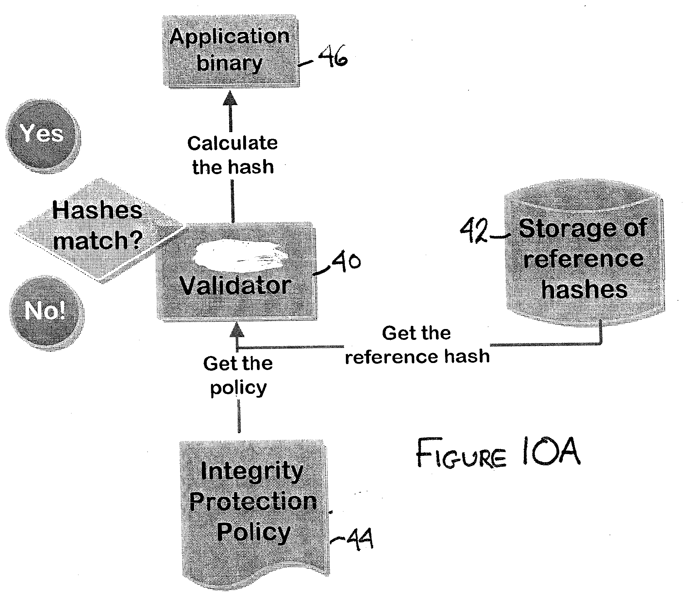

Figure 10A shows the operation of integrity protection using a validator function 40 further in accordance with the exemplary embodiments of this invention. The validator function 40 ensures the integrity of the executable components (e.g., binaries and libraries) at run time, and in response to offline attacks. The validator function 40 can be a module of the kernel 14, and it operates to calculate a cryptographic hash of a file (e.g., by using SHA-1). Reference hashes are stored in protected storage 42, and are used to bind an application identity (pathname) to an executable file. When a new application is presented, the validator function 40 calculates the reference hash of the application, signs it using a validator private key, and stores it in the storage 42. Before the application is run the signed reference hash is retrieved from the storage 42, the validator function 40 calculates the hash of the application binary 46 and compares the result to the reference hash retrieved from the protected storage 42. If an integrity protection violation is detected (e.g., the component has been modified) then some action is executed. This action depends on an integrity protection policy 44 of the device. Typically loading of the modified component is prevented, but there are also other options available such as stripping all additional privileges from the process, or more simply just logging the violation. If the hashes match the application is authorized for execution, otherwise the application may be denied execution.

This approach is superior to the traditional approach to OS integrity protection, where the entire firmware image is signed and the entire image is verified during boot. However, a firmware image contains both read-only and writable files, and the firmware image is updated by installing new packages as opposed to installing a new image. For at least these reasons the load-time integrity protection approach is preferred. As opposed to verifying the entire firmware image once, only those components that will be executed are verified during code loading. The verification status of the object is cached so that files need be verified only once after each boot Any file modification attempts are detectable by using Linux security module hooks (LSM).

One technical effect of the integrity protection framework is that it creates a basis for building a trusted environment, where the entity/company responsible for the behavior of its consumer electronics can make any guarantees about the availability of services that a device/hardware is to deliver (e.g., emergency phone calls). A simple digital signature protection framework is not as dynamic, is not flexible, and provides no connection to the access control policies. The integrity protection framework disclosed herein (e.g., the Aegis validator) stores, for each binary, hashes with source identifiers that can be mapped to the rights a particular source has. In an embodiment the integrity protection framework can also use a local digital signature with secure extension environment secret keys to sign the storage of reference hashes.

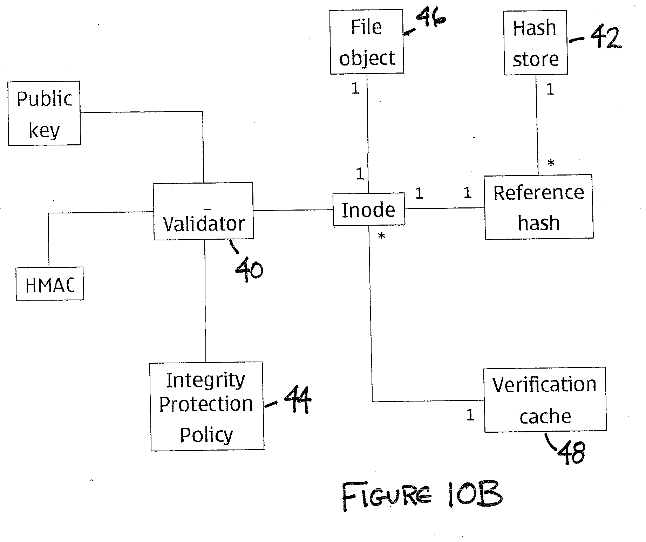

Referring also to Figure 10B, the validator 40 kernel module hooks all application and shared library load attempts. A file object 46 is identified by an inode structure. The inode number is used as a key to the hash store (42 in Figure 10A) to request a reference hash value of the inode. The validator 40 recalculates the hash value and, if there is a match, the inode number is stored in the verification cache 48. If the calculated hash value does not match the next action depends on the integrity protection policy 44. The hash store 42 is initialized in system boot using reference hashlist file, which contains pathname - cryptographic hash pairs. Pathname - cryptographic hash pairs are translated into inode - cryptographic hash pairs. The original store is integrity protected using either RSA signature (initial file) or a locally signed HMAC mechanism (local updates). There may be only one reference hashlist file, although this may be extended to have one reference hashlist file per filesystem, and tie the loading of the hashlist file to a filesystem mount event.

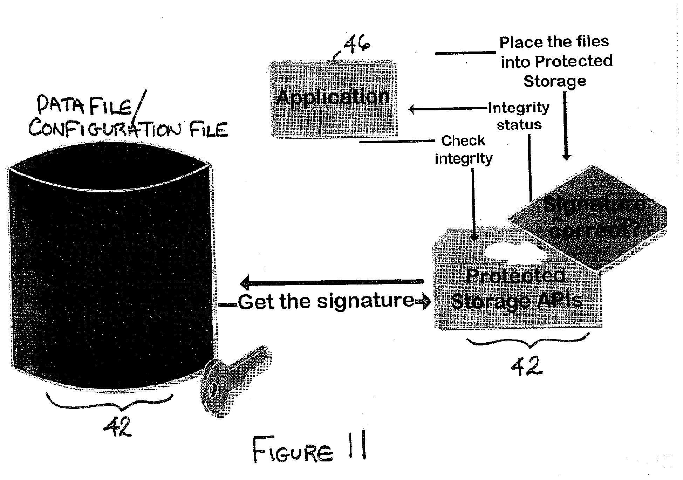

Figure 11 shows the operation of privacy protection using the protected storage 42 shown in Figure 10, according to one embodiment. The embodiment ensures the integrity of data and configuration files (stored in the protected storage 42) after installation. Additional features include data encryption within the protected storage 42, and the use of private, shared and global or externally signed storages. There is an interface to the TrEE, which is used to sign/verify, encrypt/decrypt the data. Access to a protected storage is defined by an application identifier or application group.

One technical effect of the policy protection framework is that it enables the access control decision to be dynamically bound from any application to any interface in the device. This creates a robust and attack resistant platform where the 'least privileges' principle occurs, e.g., where applications can access only what they need. For example, DRM may be accomplished by creating a resource token termed "DRM" and granting that token only to selected applications coming from the operator's SW repository. Services possessing DRM confidential information (e.g., secret content keys) will only communicate applications having that "DRM" resource token.

Also, embodiments of the policy protection framework use dynamic mappings that are created in the installation time from an abstract declaration in the application package. In an embodiment the host device itself creates and maintains a locally unique mapping from resource tokens to user identifiers UIDs and group identifiers GIDs. Creating such new tokens on the fly when installing new SW is not seen in the prior art, nor is binding them to the source of the applications. Additionally, in an embodiment a limited-access-service can be created without support from the device operator/manufacturer.

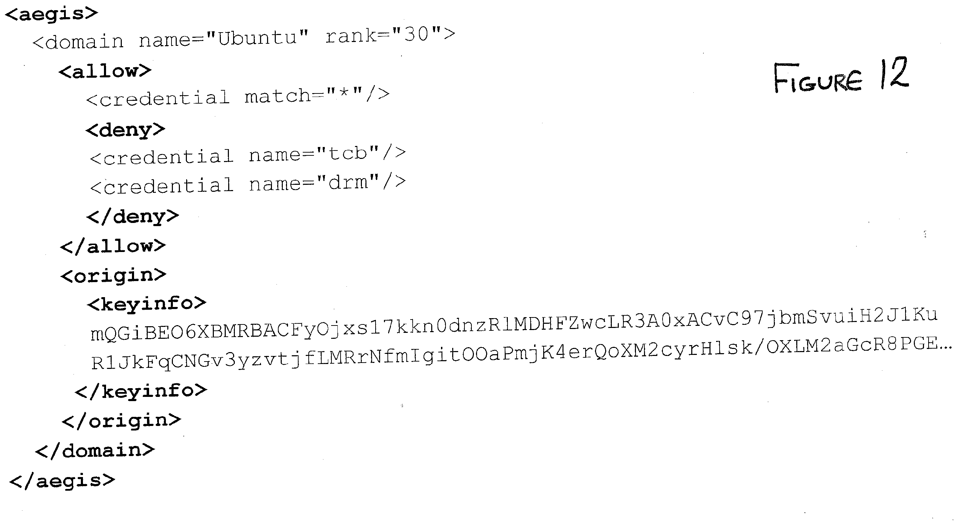

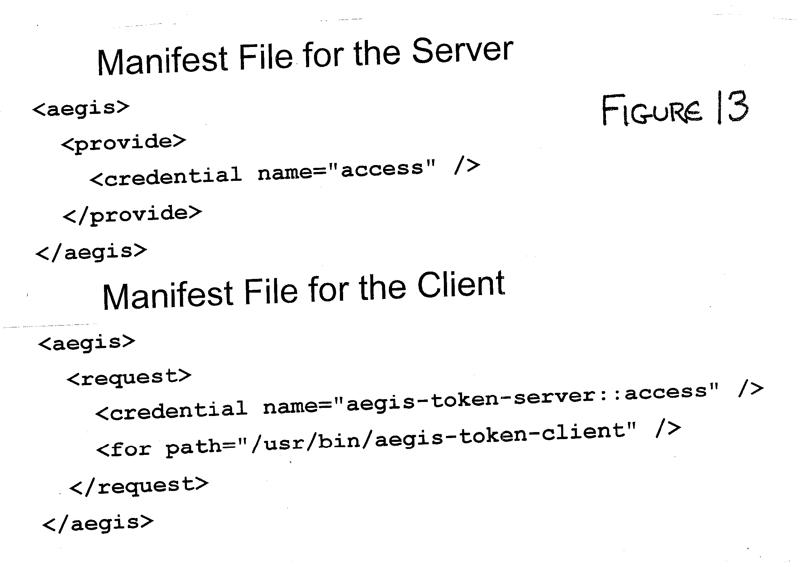

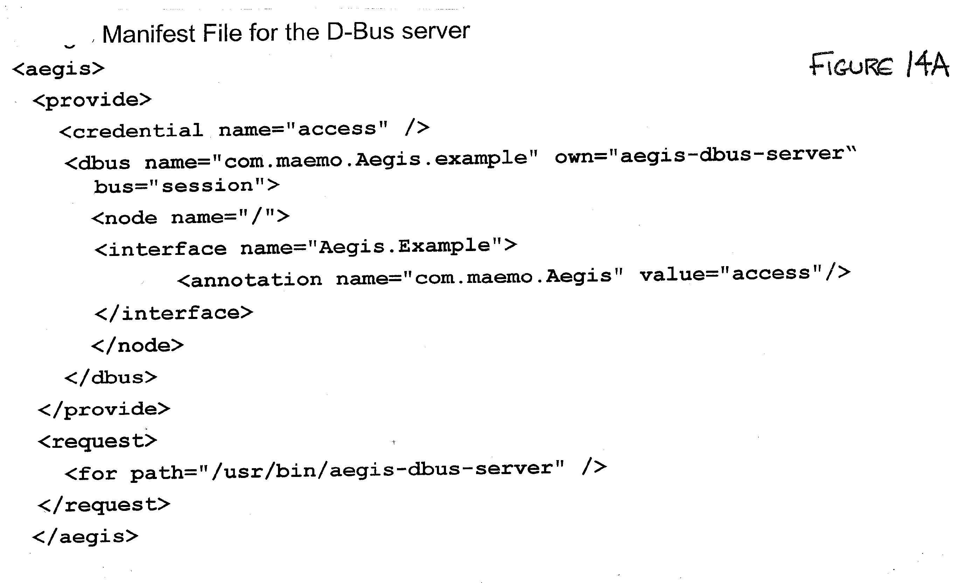

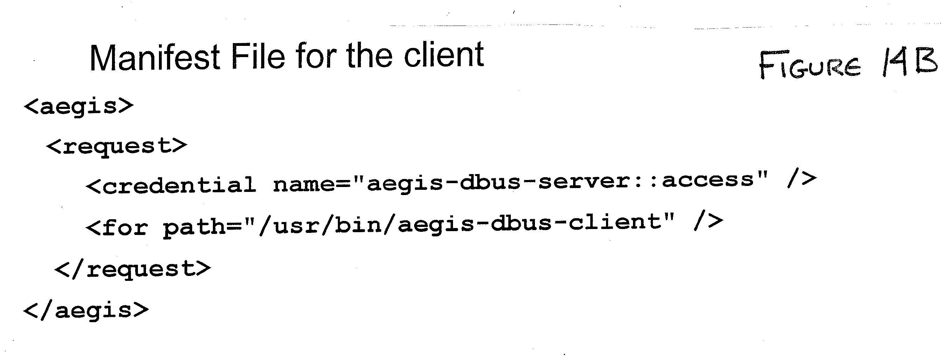

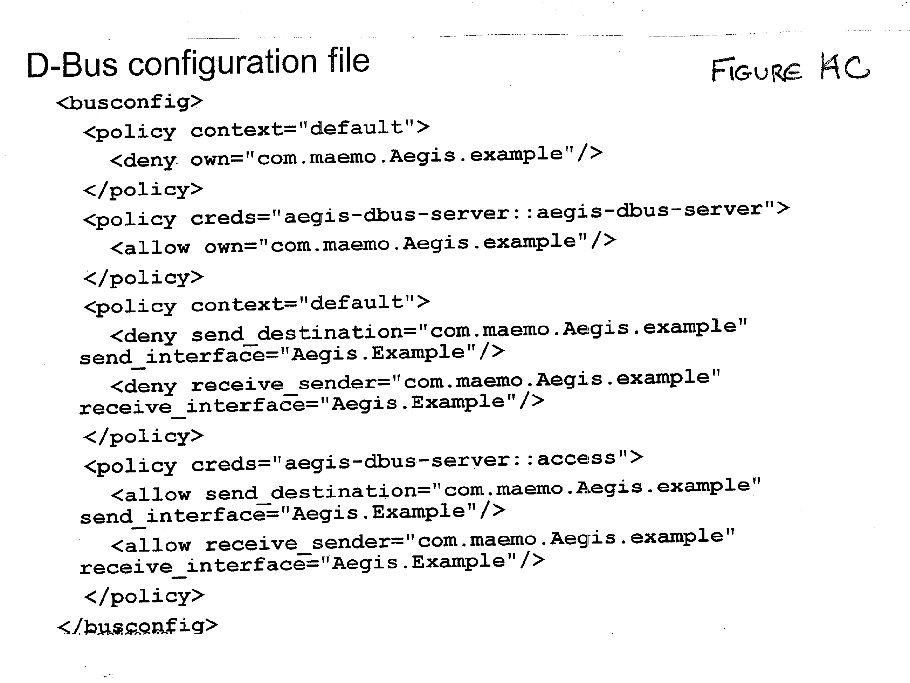

Figure 12 presents a non-limiting example of a security policy file, according to one embodiment. Figure 13 shows a non-limiting AC control example showing a manifest file for a server and for a client (the latter giving permission for a token server), according to one embodiment. Figures 14A, 14B and 14C provide a non-limiting example for the D-Bus server 20B and D-Bus client 20A (e.g., refer again to Figure 7), specifically a manifest file for the D-Bus server 20B, a manifest file for the D-Bus client 20A, and a D-Bus configuration file, respectively, according to one embodiment of the invention. The references to "Aegis" in these Figures, and elsewhere in the description, may be read as being descriptive of a name of the overall security architecture provided by the exemplary embodiments of this invention.

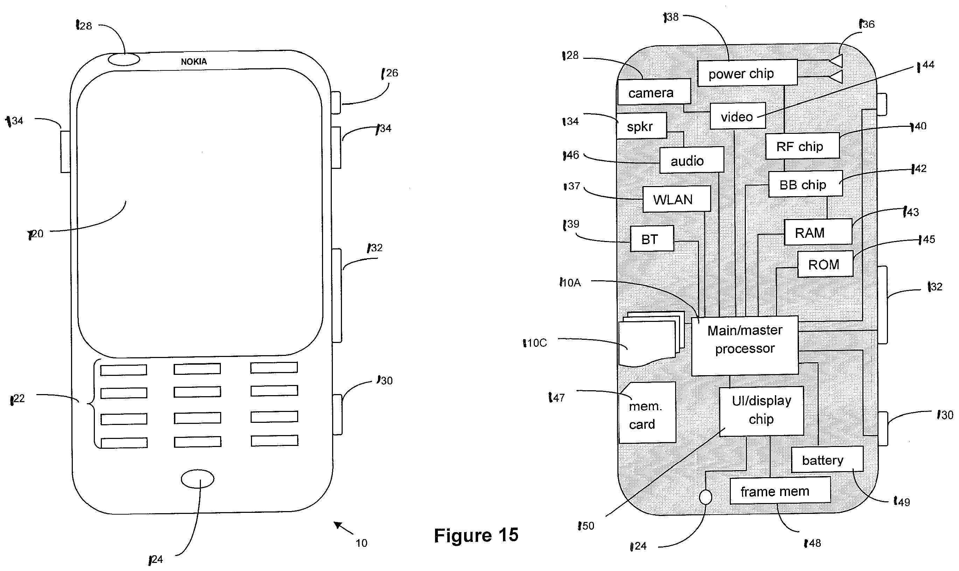

Figure 15 illustrates an exemplary device 10 in both plan view (left) and sectional view (right), and the invention may be embodied in one or some combination of the illustrated function-specific components. In Figure 15 the device 10 has a graphical display interface 120 and a user interface 122 illustrated as a keypad but understood as also encompassing touch-screen technology at the graphical display interface 120 and voice-recognition technology received at the microphone 124. A power actuator 126 controls the device being turned on and off by the user. The exemplary device 10 may have a camera 128 which is shown as being forward facing (e.g., for video calls) but may alternatively or additionally be rearward facing (e.g., for capturing images and video for local storage). The camera 128 is controlled by a shutter actuator 130 and optionally by a zoom actuator 132.

Within the sectional view of Figure 15 are seen multiple transmit/receive antennas 136 that are typically used for cellular communication. The antennas 136 may be multi-band antennas. A power chip 138 controls power amplification on the channels being transmitted and/or across the antennas that transmit simultaneously where spatial diversity is used, and amplifies the received signals. The power chip 138 outputs the amplified received signal to the radio-frequency (RF) chip 140 which demodulates and downconverts the signal for baseband processing. The baseband (BB) chip 142 detects the signal which is then converted to a bit-stream and finally decoded. Similar processing occurs in reverse for signals generated in the device 10 and transmitted from it.

Signals going to and from the camera 128 pass through an image/video processor 144 which encodes and decodes the various image frames. A separate audio processor 146 may also be present controlling signals to and from the speakers 134 and the microphone 124. The graphical display interface 120 is refreshed from a frame memory 148 as controlled by a user interface chip 150 which may process signals to and from the display interface 120 and/or additionally process user inputs from the keypad 122 and elsewhere.

Certain embodiments of the device 10 may also include one or more secondary radios such as a wireless local area network radio WLAN 137 and a Bluetooth® radio 139, which may incorporate an antenna on-chip or be coupled to an off-chip antenna.

Throughout the apparatus are various memories such as random access memory RAM 143, read only memory ROM 145, and in some embodiments there may be removable memory such as the illustrated memory card 147. Various programs 110C are stored in one or more of the memories. The programs 110C include software that is configured to operate, in cooperation with at least one of the data processors, in accordance with the various embodiments of this invention that were described above. The programs 110C are assumed to include a suitable operating system, such as Linux, and are configured to implement the user mode 12 and the kernel mode 14 functionalities described above. The various applications may be downloaded from the source 1 via wireless communication, or downloaded via a wire to the device 10.

All of these components within the device 10 are normally powered by a portable power supply such as a battery 149.

The aforesaid processors 138, 140, 142, 144, 146, 150, if embodied as separate entities in the device 10, may operate in a slave relationship to the main processor 110A which may then be in a master relationship to them. Any or all of these various processors of Figure 15 access one or more of the various memories, which may be on-chip with the processor or separate from the processor.

Note that the various chips (e.g., 138, 140, 142, etc.) that were described above may be combined into a fewer number than described and, in a most compact case, may all be embodied physically within a single chip.

The various embodiments of the device 10 can include, but are not limited to, cellular phones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions. Note that is some embodiments the device 10 may not include wireless communication capabilities, or at least may not include cellular radio communication capabilities.

Based on the foregoing it should be apparent that the exemplary embodiments of this invention provide a method, apparatus and computer program product(s) to provide an enhanced security architecture for a user device.

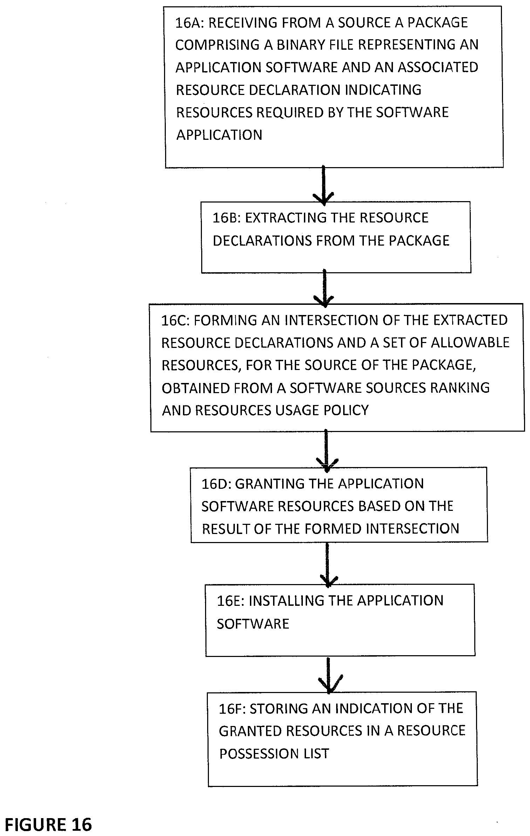

In accordance with first exemplary embodiments of this invention, and referring to Figure 16, a method comprises receiving from a source a package comprising a binary file representing an application software and an associated resource declaration indicating resources required by the software application (Block 16A). The method further comprises extracting the resource declarations from the package (Block 16B), and forming an intersection of the extracted resource declarations and a set of allowable resources, for the source of the package, obtained from a software sources ranking and resources usage policy (Block 16C). The method further comprises granting the application software resources based on the result of the formed intersection (Block 16D), installing the application software (Block 16E), and storing an indication of the granted resources in a resource possession list (Block 16F).

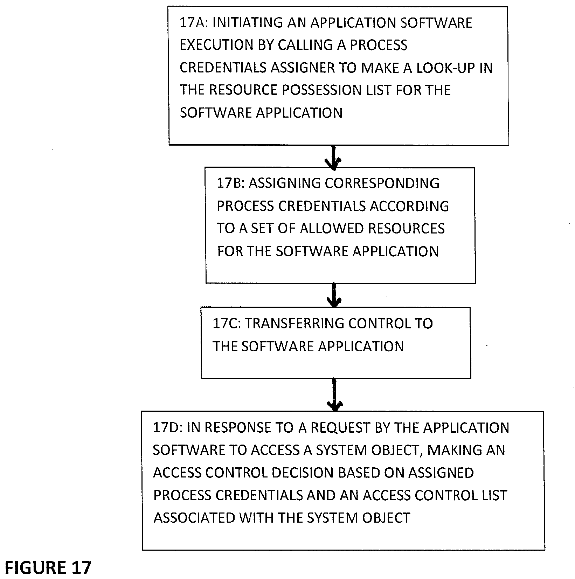

In accordance with further exemplary embodiments of this invention, and referring to Figure 17, a method comprises (at Block 17A) initiating an application software execution by calling a process credentials assigner to make a look-up in the resource possession list for the software application, (Block 17B) assigning corresponding process credentials according to a set of allowed resources for the software application; (Block 17C) transferring control to the software application and (in Block 17D), in response to a request by the application software to access a system object, making an access control decision based on assigned process credentials and an access control list associated with the system object.

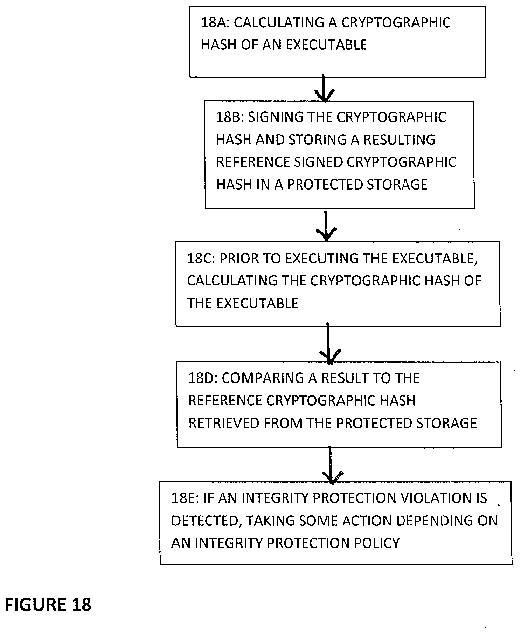

In accordance with further exemplary embodiments of this invention, and referring to Figure 18, a method comprises (at Block 18A) calculating a cryptographic hash of an executable and, at Block 18B, signing the cryptographic hash and storing a resulting reference signed cryptographic hash in a protected storage. The method further comprises, prior to executing the executable, calculating the cryptographic hash of the executable (Block 18C), and comparing a result to the reference cryptographic hash retrieved from the protected storage (Block 18D). If an integrity protection violation is detected, the method further comprises taking some action depending on an integrity protection policy (Block 18E).

The various blocks shown in Figure 16, 17 and 18 may be viewed as method steps, and/or as operations that result from operation of computer program code, and/or as a plurality of coupled logic circuit elements constructed to carry out the associated function(s).

In accordance with an exemplary aspect of the invention there is at least a method, apparatus, and executable computer program to perform actions comprising comprising receiving, at a device, from a source a package comprising a binary file representing an application software and an associated resource declaration indicating resources required by the application software, extracting the resource declaration from the package, forming an intersection of the extracted resource declaration and a set of allowable resources, for the source of the package, obtained from a software sources ranking and resources usage policy, granting the application software resources based on the result of the formed intersection, installing the application software, and storing an indication of the granted resources in a resource possession list.

Further, in accordance with the paragraph above, the resource possession list defines which resources are allowed to be accessed by the application software, and wherein the resource possession list comprises a mapping between an application identifier of the application software and the allowed resources.

In addition, in accordance with the paragraph above, the application identifier uniquely identifies an application, and wherein the application identifier remains unchanged at least between bootups, for different instances of a same application, and after an application restart.

Wherein, in accordance with the two paragraphs above, the application identifier is represented by AppID = {SourceID, PackageName, AppName}, wherein the SourceID is a unique identifier of an application source, wherein the PackageName is a package name without a version number, and wherein the AppName is defined by an application developer.

Further, in accordance with any of the paragraphs above, there is storing, for the binary file, a cryptographic hash with source identifiers of the binary file that are mapped to rights of the source, wherein a storage of the cryptographic hash is signed using a local digital signature with secret key.

In addition, in accordance with any of the paragraphs above, there is modifying a bus policy file for the application software, wherein the bus policy file provides access control rights for the application software to communicate with other resources.

Additionally, in accordance with any of the paragraphs above, there is initiating an execution of the application software comprising accessing the resource possession list, assigning corresponding process credentials according to allowed resources for the application software defined in the resource possession list, transferring control to the application software, and executing the application software.

Further, in accordance with the paragraph above, there is, in response to a request by the application software to access a system object, determining access control of the application software based on the assigned process credentials and an access control list associated with the system object.

Further, in accordance with any of the paragraphs above, there is creating a resource token, and granting the resource token to only selected application software coming from a software repository associated with at least one operator of the device.

In addition, in accordance with the paragraph above, there is maintaining, on the device, a locally unique mapping between the resource token and identities of the at least one operator of the device, wherein the locally unique mapping enables an access control decision to be dynamically bound from the selected application software to an interface of the device, wherein services processing the resource token will only communicate with applications which have been granted the resource token.

In accordance with the exemplary embodiments of the invention, there is at least a method, apparatus, and an executable computer program for performing calculating, at a device, a cryptographic hash of an executable, signing the cryptographic hash, and storing a resulting reference signed cryptographic hash in a protected storage, prior to executing the executable, calculating the cryptographic hash of the executable, and comparing a result to the reference cryptographic hash retrieved from the protected storage.

Further, in accordance with the paragraph above, if the result and the reference cryptographic hash match, then there is executing the executable.

Further, in accordance with the paragraphs above, if an integrity protection violation is detected, taking an action depending on an integrity protection policy.

In addition, in accordance with the paragraphs above, wherein the action comprises at least one of preventing loading of the executable, stripping additional privileges from the executable, and logging the violation.

In accordance with the exemplary embodiments of the invention, there is at least a method, apparatus, and an executable computer program for performing verifying, during a boot process, an integrity of an application kernel on a device, wherein verifying the integrity comprises verifying an integrity of a boot read only memory of the device, based on a verified boot read only memory, verifying a loader integrity of the device, wherein the loader integrity verification indicates a signed software image for the application kernel is present, and for the case that the loader integrity is not verified, then determining if there is a policy in place to prevent access to the application kernel, wherein if there is no policy in place to prevent access to the application kernel, then restricting a security functionality of the device and booting the device with the restricted functionality.

Further, in accordance with the paragraph above, if the integrity of a boot read only memory is not verified, there is performing a reset operation of the device.

Further, in accordance with the paragraphs above, the restricting comprises at least one of disabling certain digital rights management keys, and preventing certain content from being decrypted, and executing the application kernel with the restricted security functionality.

Additionally, in accordance with the paragraphs above, if the loader integrity is not verified, determining if a subscriber identity module of the device is locked, wherein for the case the subscriber identity module is locked, then performing a reset operation of the device, and wherein for the case that the subscriber identity module is not locked, then restricting a security functionality of the device, wherein the restricting comprises at least one of disabling certain digital rights management keys, and preventing certain content from being decrypted, and executing the application kernel with the restricted security functionality.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto.

While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should be appreciated that at least some aspects of the exemplary embodiments of the inventions may be practiced in various components such as integrated circuit chips and modules. It should thus be appreciated that the exemplary embodiments of this invention may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this invention. Further, it is noted that, in accordance with the exemplary embodiments, the terms application software and software application are non-limiting and can be used interchangeably.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention. For example, the use of these exemplary embodiments is not limited to only one type of operating system, such as Linux. Further, the user devices that may benefit from these exemplary embodiments are not limited to handheld or portable devices, but may include as well desktop computers and workstations, as well as servers and mainframe computers, as non-limiting examples.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method, comprising:

   receiving, at a device, from a source a package comprising a binary file representing an application software and an associated resource declaration indicating resources required by the application software;
   extracting the resource declaration from the package;
   forming an intersection of the extracted resource declaration and a set of allowable resources, for the source of the package, obtained from a software sources ranking and resources usage policy;
   granting the application software resources based on the result of the formed intersection;
   installing the application software; and
   storing an indication of the granted resources in a resource possession list.

2. The method according to claim 1, wherein the resource possession list defines which resources are allowed to be accessed by the application software, and wherein the resource possession list comprises a mapping between an application identifier of the application software and the allowed resources.

3. The method according to claim 2, wherein the application identifier uniquely identifies an application, and wherein the application identifier remains unchanged at least between bootups, for different instances of a same application, and after an application restart.

4. The method according to any of claims 2 or 3, wherein the application identifier is represented by AppID = {*SourceID, PackageName, AppName*}*,* wherein the SourceID is a unique identifier of an application source, wherein the PackageName is a package name without a version number, and wherein the AppName is defined by an application developer.

5. The method according to any preceding claim, further comprising:
   storing, for the binary file, a cryptographic hash with source identifiers of the binary file that are mapped to rights of the source.

6. The method according to claim 5, wherein a storage of the cryptographic hash is signed using a local digital signature with secret keys.

7. The method according to any preceding claim, further comprising:

modifying a bus policy file for the application software, wherein the bus policy file provides access control rights for the application software to communicate with other resources.

8. The method according to any preceding claim further comprising:

   initiating an execution of the application software comprising accessing the resource possession list;
   assigning corresponding process credentials according to allowed resources for the application software defined in the resource possession list;
   transferring control to the application software; and
   executing the application software.

9. The method according to claim 8, further comprising:
   in response to a request by the application software to access a system object, determining access control of the application software based on the assigned process credentials and an access control list associated with the system object.

10. The method according to any preceding claim further comprising:

   creating a resource token; and
   granting the resource token to only selected application software coming from a software repository associated with at least one operator of the device.

11. The method according to claim 10, further comprising:
   maintaining, on the device, a locally unique mapping between the resource token and identities of the at least one operator of the device, wherein the locally unique mapping enables an access control decision to be dynamically bound from the selected application software to an interface of the device.

12. The method according to claim 10, wherein services processing the resource token will only communicate with applications which have been granted the resource token.

13. A non-transitory computer-readable medium that contains software program instructions, wherein execution of the software program instructions by at least one data processor results in performance of operations that comprise execution of the method according to any of the preceding claims.

14. An apparatus comprising:

   means for receiving from a source a package comprising a binary file representing an application software and an associated resource declaration indicating resources required by the application software;
   means for extracting the resource declaration from the package;
   means for forming an intersection of the extracted resource declaration and a set of allowable resources, for the source of the package, obtained from a software sources ranking and resources usage policy;
   means for granting the application software resources based on the result of the formed intersection;
   means for installing the application software; and
   means for storing an indication of the granted resources in a resource possession list.

15. The apparatus according to claim 14, comprising means for performing a method according to any of claims 2 to 12.


**Patentansprüche**

1. Verfahren, das Folgendes umfasst:

   Empfangen eines Pakets, das eine Binärdatei, die eine Anwendungssoftware repräsentiert, sowie eine verknüpfte Ressourcenerklärung umfasst, die Ressourcen anzeigt, die von der Anwendungssoftware benötigt werden, an einer Vorrichtung von einer Quelle;
   Extrahieren der Ressourcenerklärung aus dem Paket;
   Bilden einer Überschneidung der extrahierten Ressourcenerklärung und eines Satzes von erlaubten Ressourcen für die Quelle des Pakets, das von einer Richtlinie zur Softwarequelleneinstufung und Ressourcennutzung erhalten wird;
Gewähren der Anwendungssoftwareressourcen auf Basis des Ergebnisses der gebildeten Überschneidung;
Installieren der Anwendungssoftware; und
Speichern einer Anzeige der gewährten Ressourcen in einer Ressourcenbesitzliste.

2. Verfahren nach Anspruch 1, wobei die Ressourcenbesitzliste definiert, auf welche Ressourcen die Anwendungssoftware zugreifen darf, und wobei die Ressourcenbesitzliste eine Zuordnung zwischen einer Anwendungskennung der Anwendungssoftware und den erlaubten Ressourcen umfasst.

3. Verfahren nach Anspruch 2, wobei die Anwendungskennung eine Anwendung eindeutig identifiziert und wobei die Anwendungskennung mindestens zwischen mehrmaligem Booten für verschiedene Instanzen einer selben Anwendung und nach einem Anwendungsneustart unverändert bleibt.

4. Verfahren nach einem der Ansprüche 2 oder 3, wobei die Anwendungskennung durch AppID = {*SourceID, PackageName, AppName*} repräsentiert wird, wobei *SourceID* eine eindeutige Kennung einer Anwendungsquelle ist, wobei *PackageName* ein Paketname ohne eine Versionsnummer ist und wobei AppNamedurch einen Anwendungsentwickler definiert ist.

5. Verfahren nach einem der vorhergehenden Ansprüche, das ferner Folgendes umfasst:
Speichern eines kryptographischen Hash mit Quellkennungen der Binärdatei, die Rechten der Quelle zugeordnet sind, für die Binärdatei.

6. Verfahren nach Anspruch 5, wobei eine Speicherung des kryptographischen Hash unter Verwendung einer lokalen digitalen Signatur mit geheimen Schlüsseln signiert wird.

7. Verfahren nach einem der vorhergehenden Ansprüche, das ferner Folgendes umfasst:
Modifizieren einer Busrichtliniendatei für die Anwendungssoftware, wobei die Busrichtliniendatei Zugriffssteuerrechte für die Anwendungssoftware zum Kommunizieren mit anderen Ressourcen bereitstellt.

8. Verfahren nach einem der vorhergehenden Ansprüche, das ferner Folgendes umfasst:

Initiieren einer Ausführung der Anwendungssoftware, das das Zugreifen auf die Ressourcenbesitzliste umfasst;
Zuweisen von entsprechenden Prozesszugangsdaten, die in der Ressourcenbesitzliste definiert sind, gemäß erlaubten Ressourcen für die Anwendungssoftware;
Übergeben der Steuerung an die Anwendungssoftware; und
Ausführen der Anwendungssoftware.

9. Verfahren nach Anspruch 8, das ferner Folgendes umfasst:
in Reaktion auf eine Anforderung des Zugriffs auf ein Systemobjekt durch die Anwendungssoftware Bestimmen einer Zugriffssteuerung der Anwendungssoftware auf Basis der zugewiesenen Prozesszugangsdaten und einer Zugriffssteuerliste, die mit dem Systemobjekt verknüpft ist.

10. Verfahren nach einem der vorhergehenden Ansprüche, das ferner Folgendes umfasst:

Erstellen eines Ressourcentokens; und
Gewähren des Ressourcentokens nur für ausgewählte Anwendungssoftware, die aus einem Softwarerepositorium kommt, das mit mindestens einem Bediener der Vorrichtung verknüpft ist.

11. Verfahren nach Anspruch 10, das ferner Folgendes umfasst:
Aufrechterhalten einer lokal eindeutigen Zuordnung zwischen dem Ressourcentoken und Identitäten des mindestens einen Bedieners der Vorrichtung, wobei das lokal eindeutig Zuordnen es erlaubt, eine Zugriffssteuerentscheidung dynamisch von der ausgewählten Anwendungssoftware an eine Schnittstelle der Vorrichtung zu binden.

12. Verfahren nach Anspruch 10, wobei Dienste, die das Ressourcentoken verarbeiten, nur mit Anwendungen kommunizieren, denen das Ressourcentoken gewährt wurde.

13. Nichttransitorisches computerlesbares Medium, das Softwareprogrammanweisungen enthält, wobei eine Ausführung der Softwareprogrammanweisungen durch mindestens einen Datenprozessor in einer Durchführung von Operationen, die eine Ausführung des Verfahrens nach einem der vorhergehenden Ansprüche umfassen, resultiert.

**14.** Einrichtung, die Folgendes umfasst:

Mittel zum Empfangen eines Pakets, das eine Binärdatei, die eine Anwendungssoftware repräsentiert, sowie eine verknüpfte Ressourcenerklärung umfasst, die Ressourcen anzeigt, die von der Anwendungssoftware benötigt werden, von einer Quelle;
Mittel zum Extrahieren der Ressourcenerklärung aus dem Paket;
Mittel zum Bilden einer Überschneidung der extrahierten Ressourcenerklärung und eines Satzes von erlaubten Ressourcen für die Quelle des Pakets, das von einer Richtlinie zur Softwarequelleneinstufung und Ressourcennutzung erhalten wird;
Mittel zum Gewähren der Anwendungssoftwareressourcen auf Basis des Ergebnisses der gebildeten Überschneidung;
Mittel zum Installieren der Anwendungssoftware; und
Mittel zum Speichern einer Anzeige der gewährten Ressourcen in einer Ressourcenbesitzliste.

**15.** Einrichtung nach Anspruch 14, die Mittel zum Durchführen eines Verfahrens nach einem der Ansprüche 2 bis 12 umfasst.

## Revendications

**1.** Procédé, comprenant les étapes consistant à :

recevoir, au niveau d'un dispositif, depuis une source, un paquet comprenant un fichier binaire représentant un logiciel d'application et une déclaration de ressources associée indiquant des ressources requises par le logiciel d'application ;
extraire la déclaration de ressources à partir du paquet ;
former une intersection de la déclaration de ressources extraite et d'un ensemble de ressources autorisées, pour la source du paquet, obtenue à partir d'un classement de sources logicielles et d'une politique d'utilisation de ressources ;
accorder les ressources de logiciel d'application sur la base du résultat de l'intersection formée ;
installer le logiciel d'application ; et
stocker une indication des ressources accordées dans une liste de possession de ressources.

**2.** Procédé selon la revendication 1, dans lequel la liste de possession de ressources définit à quelles ressources le logiciel d'application est autorisé à accéder, et dans lequel la liste de possession de ressources comprend un mappage entre un identifiant d'application du logiciel d'application et les ressources autorisées.

**3.** Procédé selon la revendication 2, dans lequel l'identifiant d'application identifie de manière unique une application, et dans lequel l'identifiant d'application reste inchangé au moins entre les amorçages, pour différentes instances d'une même application, et après un redémarrage d'application.

**4.** Procédé selon l'une quelconque des revendications 2 ou 3, dans lequel l'identifiant d'application est représenté par AppID = {*SourceID, PackageName, AppName}*, dans lequel SourceID est un identifiant unique d'une source d'application, dans lequel PackageName est un nom de paquet sans un numéro de version, et dans lequel AppName est défini par un développeur d'application.

**5.** Procédé selon l'une quelconque des revendications précédentes, comprenant en outre l'étape consistant à :
stocker, pour le fichier binaire, un hachage cryptographique avec des identifiants de source du fichier binaire qui sont mappés à des droits de la source.

**6.** Procédé selon la revendication 5, dans lequel un stockage du hachage cryptographique est signé en utilisant une signature numérique locale avec des clés secrètes.

**7.** Procédé selon l'une quelconque des revendications précédentes, comprenant en outre l'étape consistant à :
modifier un fichier de politique de bus pour le logiciel d'application, dans lequel le fichier de politique de bus fournit des droits de commande d'accès pour le logiciel d'application pour communiquer avec d'autres ressources.

8. Procédé selon l'une quelconque des revendications précédentes, comprenant en outre les étapes consistant à :

   initier une exécution du logiciel d'application comprenant l'accès à la liste de possession de ressources ;
   attribuer des informations d'identification correspondantes de processus selon des ressources autorisées pour le logiciel d'application défini dans la liste de possession de ressources ;
   transférer la commande au logiciel d'application ; et
   exécuter le logiciel d'application.

9. Procédé selon la revendication 8, comprenant en outre l'étape consistant à :
   en réponse à une demande par le logiciel d'application d'accès à un objet système, déterminer une commande d'accès du logiciel d'application sur la base des informations d'identification de processus attribuées et d'une liste de commande d'accès associée à l'objet système.

10. Procédé selon l'une quelconque des revendications précédentes comprenant en outre les étapes consistant à :

    créer un jeton de ressource ; et
    accorder le jeton de ressource uniquement à un logiciel d'application sélectionné provenant d'un référentiel de logiciels associé à au moins un opérateur du dispositif.

11. Procédé selon la revendication 10, comprenant en outre l'étape consistant à :
    maintenir, sur le dispositif, un mappage localement unique entre le jeton de ressource et des identités de l'au moins un opérateur du dispositif, dans lequel le mappage localement unique permet à une décision de commande d'accès d'être liée dynamiquement du logiciel d'application sélectionné à une interface du dispositif.

12. Procédé selon la revendication 10, dans lequel des services traitant le jeton de ressource ne communiqueront qu'avec des applications auxquelles le jeton de ressource a été accordé.

13. Support non transitoire lisible par ordinateur qui contient des instructions de programme logiciel, dans lequel l'exécution des instructions de programme logiciel par au moins un processeur de données a pour résultat de réaliser des opérations qui comprennent l'exécution du procédé selon l'une quelconque des revendications précédentes.

14. Appareil comprenant :

    des moyens pour recevoir, depuis une source, un paquet comprenant un fichier binaire représentant un logiciel d'application et une déclaration de ressources associée indiquant des ressources requises par le logiciel d'application ;
    des moyens pour extraire la déclaration de ressources à partir du paquet ;
    des moyens pour former une intersection de la déclaration de ressources extraite et d'un ensemble de ressources autorisées, pour la source du paquet, obtenue à partir d'un classement de sources logicielles et d'une politique d'utilisation de ressources ;
    des moyens pour accorder les ressources de logiciel d'application sur la base du résultat de l'intersection formée ;
    des moyens pour installer le logiciel d'application ; et
    des moyens pour stocker une indication des ressources accordées dans une liste de possession de ressources.

15. Appareil selon la revendication 14, comprenant des moyens pour réaliser un procédé selon l'une quelconque des revendications 2 à 12.

FIGURE 1
DEVICE
10

SOURCE
1

App₁  App₂  ...  AppN

1.

12

12D
D-Bus policy

12C
D-Bus daemon

12E
D-Bus extensions

12B
Device policy

2.

12A
Installer

4.

User mode

3.

Kernel mode
14

14D
File's AC lists

"Linux Kernel Reference monitor"

14C

14B
Process Credentials assigner

14A
Resource possession list

Figure 2. Principle of least privilege enforcement.

Figure 3. MSC for the installation process

EP 2 486 509 B1

Package Resource
Declaration:
What do I want to
access?

∩
intersection

Allowed resources
for a source of SW:
What can I get, if my
SW was certified by
the source?

Result allowed
resources:
What resources my
SW can access
during run-time?

Figure 4. Obtaining the result set of resources.

Nokia Signed
SW Image

Unsigned SW
Image
9H

9D

Restrict security
functionality *

Reset

9G

9F

No

Yes

Device
SIM Locked?

9E

Integrity is OK

Integrity isn't OK

9B

Loader

Reset

9C

Integrity is OK —— Integrity isn't OK

FIGURE 9

Boot ROM — 9A

FIGURE
5 DEVICE
10)

12

12C
12D    3b.                    Device  12B
D-Bus  D-Bus daemon          policy                    12A
policy      D-Bus            (SSRRU)                   Installer
            extensions
12E                                                    User mode

Kernel mode
14D                                                         14
File's AC lists    Process              14B'
                   Credentials
                                   Resource  14A
"Linux Kernel                      possession
Reference              2.          list
monitor"          Process
14C     3a.       Credentials  ←— 1.
                  assigner
                       14B

MSC for the run-time access control

FIGURE 6

20A — D-Bus client

sys_execve routine

14B — Process Credentials assigner

14A — Resource possession list

12C — D-Bus daemon

12D — D-Bus policy

12D — D-Bus Connection policy

20B — D-Bus server

7A

Call to execute an application from user

Call

Get the allowed set of resources for this application

Return the allowed set of resources for this application

Modifies application credentials according to the set of allowed resources

Done

Transfer control to the application executable

Application is executed

Connect

7B

Get the policy rules

Return the policy rules

7C

Get the client credentials from the process task structure, if needed

Build a connection specific policy based on the client credentials and D-Bus policy

7D

Idle

7E

Send message to the D-Bus server

Check to get an access control decision

Return the access control decision

7F

If access control decision is "Allow"

Pass the message

7G

If access control decision is "Not Allow"

Error returned : No permissions

MSC for the run-time in case of D-Bus access control

FIGURE 7

MSC for the run-time access control made by application itself

FIGURE 8

Application
binary —46

Yes

Calculate
the hash

Hashes
match?

Validator —40

42— Storage of
reference
hashes

No!

Get the
reference hash

Get the
policy

FIGURE 10A

Integrity
Protection
Policy —44

FIGURE 10B

FIGURE 11

```
<aegis>
<domain name="ubuntu" rank="30">
  <allow>
    <credential match="*"/>
  <deny>
    <credential name="tcb"/>
    <credential name="drm"/>
  </deny>
  </allow>
  <origin>
    <keyinfo>
mQGiBEO6XBMRBACFyOjxs17kkn0dnzR1MDHFZwcLR3A0xACvC97jbmSvuiH2J1Ku
R1JkFqCNGv3yzvtjfLMRrNfmIgitOOaPmjK4erQoXM2cyrHlsk/OXLM2aGCR8PGE...
    </keyinfo>
  </origin>
</domain>
</aegis>
```

FIGURE 12

## Manifest File for the Server

```
<aegis>
   <provide>
      <credential name="access" />
   </provide>
</aegis>
```

FIGURE 13

## Manifest File for the Client

```
<aegis>
   <request>
      <credential name="aegis-token-server::access" />
      <for path="/usr/bin/aegis-token-client" />
   </request>
</aegis>
```

Manifest File for the D-Bus server

FIGURE 14A

```
<aegis>
  <provide>
    <credential name="access" />
    <dbus name="com.maemo.Aegis.example" own="aegis-dbus-server"
      bus="session">
      <node name="/">
      <interface name="Aegis.Example">
            <annotation name="com.maemo.Aegis" value="access"/>
      </interface>
      </node>
    </dbus>
  </provide>
  <request>
    <for path="/usr/bin/aegis-dbus-server" />
  </request>
</aegis>
```

EP 2 486 509 B1

## Manifest File for the client

FIGURE 14B

```
<aegis>

  <request>

    <credential name="aegis-dbus-server::access" />

    <for path="/usr/bin/aegis-dbus-client" />

  </request>

</aegis>
```

EP 2 486 509 B1

# D-Bus configuration file

FIGURE 11C

```
<busconfig>
  <policy context="default">
    <deny own="com.maemo.Aegis.example"/>
  </policy>
  <policy creds="aegis-dbus-server::aegis-dbus-server">
    <allow own="com.maemo.Aegis.example"/>
  </policy>
  <policy context="default">
    <deny send_destination="com.maemo.Aegis.example"
    send_interface="Aegis.Example"/>
    <deny receive_sender="com.maemo.Aegis.example"
    receive_interface="Aegis.Example"/>
  </policy>
  <policy creds="aegis-dbus-server::access">
    <allow send_destination="com.maemo.Aegis.example"
    send_interface="Aegis.Example"/>
    <allow receive_sender="com.maemo.Aegis.example"
    receive_interface="Aegis.Example"/>
  </policy>
</busconfig>
```

EP 2 486 509 B1

Figure 15

16A: RECEIVING FROM A SOURCE A PACKAGE COMPRISING A BINARY FILE REPRESENTING AN APPLICATION SOFTWARE AND AN ASSOCIATED RESOURCE DECLARATION INDICATING RESOURCES REQUIRED BY THE SOFTWARE APPLICATION

16B: EXTRACTING THE RESOURCE DECLARATIONS FROM THE PACKAGE

16C: FORMING AN INTERSECTION OF THE EXTRACTED RESOURCE DECLARATIONS AND A SET OF ALLOWABLE RESOURCES, FOR THE SOURCE OF THE PACKAGE, OBTAINED FROM A SOFTWARE SOURCES RANKING AND RESOURCES USAGE POLICY

16D: GRANTING THE APPLICATION SOFTWARE RESOURCES BASED ON THE RESULT OF THE FORMED INTERSECTION

16E: INSTALLING THE APPLICATION SOFTWARE

16F: STORING AN INDICATION OF THE GRANTED RESOURCES IN A RESOURCE POSSESSION LIST

FIGURE 16

17A: INITIATING AN APPLICATION SOFTWARE EXECUTION BY CALLING A PROCESS CREDENTIALS ASSIGNER TO MAKE A LOOK-UP IN THE RESOURCE POSSESSION LIST FOR THE SOFTWARE APPLICATION

17B: ASSIGNING CORRESPONDING PROCESS CREDENTIALS ACCORDING TO A SET OF ALLOWED RESOURCES FOR THE SOFTWARE APPLICATION

17C: TRANSFERRING CONTROL TO THE SOFTWARE APPLICATION

17D: IN RESPONSE TO A REQUEST BY THE APPLICATION SOFTWARE TO ACCESS A SYSTEM OBJECT, MAKING AN ACCESS CONTROL DECISION BASED ON ASSIGNED PROCESS CREDENTIALS AND AN ACCESS CONTROL LIST ASSOCIATED WITH THE SYSTEM OBJECT

**FIGURE 17**

18A: CALCULATING A CRYPTOGRAPHIC HASH OF AN EXECUTABLE

18B: SIGNING THE CRYPTOGRAPHIC HASH AND STORING A RESULTING REFERENCE SIGNED CRYPTOGRAPHIC HASH IN A PROTECTED STORAGE

18C: PRIOR TO EXECUTING THE EXECUTABLE, CALCULATING THE CRYPTOGRAPHIC HASH OF THE EXECUTABLE

18D: COMPARING A RESULT TO THE REFERENCE CRYPTOGRAPHIC HASH RETRIEVED FROM THE PROTECTED STORAGE

18E: IF AN INTEGRITY PROTECTION VIOLATION IS DETECTED, TAKING SOME ACTION DEPENDING ON AN INTEGRITY PROTECTION POLICY

**FIGURE 18**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008189793 A1